# DEMANDE DE BREVET EUROPEEN

(11) **EP 2 947 890 A1**
(43) Date de publication de la demande: **25.11.2015**
(21) Numéro de dépôt: 15168005.5
(22) Date de dépôt: 18.05.2015
(51) Int. Cl.: H04N 21/242, H04N 21/43, H04N 21/4363, H04N 21/442, H04J 3/06, H04N 21/8547

(54) **PROCÉDÉ ET SYSTÈME DE RESTITUTION D'UN CONTENU SONORE DÉCALÉ DANS LE TEMPS PAR RAPPORT À UN CONTENU VISUEL ASSOCIÉ**

(30) Priorité: 19.05.2014 FR 1454464
(71) Demandeur: ESII, 34880 Laverune (FR)
(72) Inventeur: Dufour, Olivier, 34730 PRADES-LE-LEZ (FR); Rieux, Frédéric, 34800 CEYRAS (FR); Zirah, Joseph, 34070 MONTPELLIER (FR)
(74) Mandataire: Pontet Allano & Associes

(57) **Abrégé**

La présente invention concerne un procédé (200) de restitution d'un contenu sonore associé à un contenu visuel, représenté par un signal audio (SA) décalé dans le temps d'une avance prédéterminée constante par rapport au contenu visuel, ledit procédé (200) comprenant les étapes suivantes :
- émission sans fil (136) dudit signal audio, par au moins un appareil source vers au moins un appareil utilisateur,
- réception (140) dudit signal audio par ledit au moins un appareil utilisateur,
- recalage (148) automatique, par l'appareil utilisateur, du signal audio en fonction de l'avance et d'un retard, en vue de sa diffusion simultanée avec ledit contenu visuel, et
- diffusion (152) dudit contenu sonore par ledit au moins un appareil utilisateur ;

caractérisé en ce que la valeur du retard est déterminée en fonction d'un état de fonctionnement dudit appareil utilisateur.

Elle concerne également un système mettent oeuvre un tel procédé.

## Description

### Domaine technique

La présente invention concerne un procédé de restitution d'un contenu sonore associé à un contenu visuel. Elle concerne également un système mettant en oeuvre un tel procédé.

Le domaine de l'invention est le domaine du traitement d'un signal audio associé à un contenu visuel en vue de restituer le contenu sonore sur un appareil utilisateur.

### Etat de la technique

Il existe de nombreux domaines dans lesquels un besoin existe pour la restitution, au moins partiellement, d'un contenu sonore représenté par un signal audio associé à un contenu visuel qui peut être soit un signal vidéo diffusé par un écran d'affichage ou une représentation en temps réel réalisée par une ou des personnes.

Par exemple, une telle restitution sonore est largement utilisée pour les personnes malentendantes pour leur faciliter la compréhension du contenu sonore des lieux tels que les cinémas.

Une telle restitution sonore est également utilisée dans des lieux présentant un niveau de bruit constituant une barrière pour la compréhension d'un contenu sonore associé à un contenu visuel, tels que les bars ou les restaurants. Une telle restitution sonore permet également d'avoir accès à un contenu sonore de manière individuelle sans l'imposer aux personnes environnantes ou sans avoir à diffuser le contenu sonore dans le lieu.

Il existe différentes techniques de restitution d'un contenu sonore associé à un contenu visuel tel que celle décrite dans le document GB 2 458 727 A. Ce dernier décrit un procédé comprenant une séparation du signal audio et du signal vidéo constituant un signal audiovisuel. Un retard Δ est appliqué au signal audio par rapport au signal vidéo. Le signal audio est ensuite transmis, au travers d'un réseau sans fil, vers des dispositifs d'écoute personnels d'un ou plusieurs utilisateurs qui restituent le contenu sonore, et le contenu visuel est affiché sur un écran d'affichage. Chaque appareil utilisateur permet de caler le contenu sonore avec le contenu visuel de manière manuelle.

Cependant, les techniques de l'état de la technique ne permettent pas de caler automatiquement le contenu sonore avec le contenu vidéo de manière efficace. L'utilisateur est alors obligé d'intervenir à de nombreuses reprises pour régler le décalage entre le contenu sonore et le contenu visuel. Une telle situation créé un double inconfort pour l'utilisateur, d'une part un inconfort dans la perception des contenus audio et vidéo qui sont trop souvent décalés, et d'autre part un inconfort provoqué par les interventions multiples sur son appareil.

Un but de la présente invention est de remédier aux inconvénients précités.

Un but de la présente invention est de proposer un procédé et un système de restitution d'un contenu audio plus performant et plus précis.

Un autre but de la présente invention est de proposer un procédé et un système de restitution d'un contenu audio plus ergonomique et présentant moins d'inconfort pour l'utilisateur.

Encore, un autre but de la présente invention est de proposer un procédé et un système de restitution d'un contenu audio plus simple à utiliser et moins chronophage pour l'utilisateur.

### Exposé de l'invention

L'invention permet d'atteindre au moins un de ces objectifs par un procédé de restitution d'un contenu sonore associé à un contenu visuel, ledit contenu sonore étant représenté par un signal audio décalé dans le temps d'une durée prédéterminée constante, dite avance, par rapport au contenu visuel, ledit procédé comprenant les étapes suivantes :
- émission sans fil dudit signal audio, par au moins un moyen, dit appareil source, vers au moins un moyen, dit appareil utilisateur ;
- réception dudit signal audio par ledit au moins un appareil utilisateur,
- recalage automatisé, par ledit au moins un appareil utilisateur, dudit signal audio en fonction de ladite avance et d'une durée, dite retard, en vue de sa diffusion simultanée avec ledit contenu visuel, et
- diffusion dudit contenu sonore par ledit au moins un appareil utilisateur ;
caractérisé en ce que la valeur du retard est déterminée en fonction d'un état de fonctionnement dudit appareil utilisateur.

Autrement dit, la valeur du retard est déterminée en fonction d'au moins un paramètre de fonctionnement de l'appareil utilisateur.

Ainsi, le procédé selon l'invention propose de réaliser le recalage automatisé du signal audio avec une valeur de retard dépendant de l'appareil utilisateur. Par conséquent, le recalage automatisé réalisé par le procédé selon l'invention est personnalisé pour chaque appareil utilisateur, en tenant compte du fonctionnement de chaque appareil utilisateur, voir du type de l'appareil.

Un appareil utilisateur d'une marque donnée peut présenter un fonctionnement différent de celui d'un autre appareil d'une autre marque. Plus encore, il existe des différences de fonctionnement entre deux modèles différents d'un appareil d'une même marque. Ces différences peuvent être dues à une multitude de paramètres tels que la puissance de calcul d'un appareil numérique ou le système d'exploitation utilisé, une norme de réception de données par une connexion sans fil, etc. Ces différences introduisent des délais de traitement de données qui peuvent être très différents d'un appareil à l'autre.

En personnalisant le recalage du signal audio au fonctionnement de chaque appareil le procédé selon l'invention permet de réaliser un recalage automatisé du signal audio en vue de sa diffusion simultanée avec le contenu vidéo plus précis et plus performant.

La précision du recalage devient encore plus importante lorsque le procédé selon l'invention est destiné à un public souffrant d'un déficit auditif qui est plus sensible aux imprécisions de décalage. Le procédé selon l'invention permet de proposer une restitution avec une précision satisfaisante pour ce public.

Un tel recalage personnalisé permet également de diminuer, voire de supprimer, les interventions manuelles de l'utilisateur pour ajuster le recalage, ce qui est plus ergonomique et présente moins d'inconfort pour l'utilisateur.

Enfin, le recalage automatisé étant plus précis pour chaque appareil utilisateur, un ajustement manuel du recalage par une intervention de l'utilisateur, si le besoin se présente, sera plus simple, plus rapide et moins chronophage.

Selon l'invention, il est également possible de déterminer le retard en fonction du fonctionnement de l'appareil source, les remarques sur les différences de fonctionnement de l'appareil utilisateur étant également valables pour deux appareils sources différents.

Le procédé selon l'invention peut comprendre au moins une détermination du retard en fonction de l'appareil utilisateur.

Suivant une première version du procédé selon l'invention, pour au moins un appareil utilisateur, le retard est constant, préalablement mesuré pour chaque appareil utilisateur et renseigné audit appareil utilisateur.

Dans ce cas la détermination du retard variable peut être réalisée par lecture de la valeur du retard, associée à l'appareil utilisateur, dans un moyen de mémorisation.

Par exemple, le procédé selon l'invention peut comprendre une phase préalable mesurant, pour une pluralité d'appareils utilisateurs, la valeur constante du retard. La valeur constante du retard, pour chaque appareil utilisateur peut ensuite être mémorisée avec une donnée d'identification de l'appareil utilisateur, par exemple un identifiant du modèle de l'appareil utilisateur, dans un moyen de mémorisation. Dans ce cas, au début du procédé selon l'invention, la donnée d'identification de l'appareil utilisateur est déterminée, par exemple par interrogation de l'appareil utilisateur, puis la valeur constante du retard associée à cet appareil utilisateur est déterminée par lecture/interrogation dudit moyen de mémorisation.

Le moyen de mémorisation peut être disposé du côté de l'appareil source. Dans ce cas, chaque appareil utilisateur communique son identifiant, par exemple un numéro de modèle ou une version etc., à l'appareil source qui en fonction de cet identifiant lit la valeur du retard et la communique à l'appareil utilisateur lors de l'étape de détermination de la valeur du retard.

Alternativement, l'appareil source peut transmettre à tous les appareils utilisateurs un fichier comprenant toutes les valeurs de retard associées à tous les identifiants (modèle, marque, version) d'appareils utilisateurs. Puis, chaque appareil utilisateur sélectionne, dans le fichier communiqué, la valeur de retard qui lui est associée. Ce mode de réalisation présente l'avantage de ne pas avoir à établir une communication bidirectionnelle entre l'appareil source et chaque appareil utilisateur.

Lorsqu'un appareil utilisateur n'est pas connu dans la base de données, une phase préalable de détermination du retard peut être menée, par exemple selon la deuxième version qui sera décrite ci-après, pour alimenter la base de données.

Suivant une deuxième version du procédé selon l'invention, pour au moins un appareil utilisateur, le retard est variable pendant la restitution du contenu sonore et dépend du fonctionnement, tout au long de ladite restitution, dudit appareil utilisateur, et éventuellement de l'appareil source, ledit procédé comprenant au moins une itération d'une détermination dudit retard variable tout au long de ladite restitution.

Cette deuxième version est la version préférée de l'invention.

En plus de personnaliser le recalage à chaque marque/modèle/version d'appareil utilisateur, cette version préférée du procédé selon l'invention permet en outre de personnaliser le recalage à une différence de fonctionnement/performance d'un même appareil utilisateur à différents instants lors de la restitution du contenu sonore.

En effet, la performance d'un appareil utilisateur, par exemple pour la réception sans fil de données et le traitement des données dépend de son état de fonctionnement au moment où les données sont reçues/traitées. Par exemple, dans certains appareils utilisateurs de type Smartphone, le fait qu'un écran soit allumé ou éteint peut influer sur la performance en réception de données sans fil ou la performance de traitement des données reçues. Le procédé selon l'invention permet de prendre en compte ces influences en considérant la valeur du retard comme variable et en la déterminant au moins une fois, et préférentiellement une pluralité de fois, lors de la restitution du contenu sonore.

Avantageusement, le retard variable peut être fonction d'au moins une latence, dite de traitement, comprenant :
- au moins une latence, dite utilisateur, induite au niveau de l'appareil utilisateur à partir de l'étape de réception, et
- éventuellement au moins une latence, dite source, induite au niveau de l'appareil source jusqu'à l'étape d'émission ;
au moins une, préférentiellement toutes les, itérations de la détermination du retard variable comprenant une mesure de ladite latence de traitement.

La latence de traitement est variable et dépend du fonctionnement de l'appareil utilisateur et éventuellement de l'appareil source tout au long de la restitution du contenu sonore. La prise en compte de cette latence de traitement permet d'ajuster le recalage aux variations de latences introduites par l'appareil utilisateur, et éventuellement l'appareil source, lors de la diffusion sonore.

La latence de traitement peut être mesurée de différentes manières.

Selon un mode de réalisation préférée, au moins une mesure d'une latence de traitement pour au moins un appareil utilisateur peut comprendre les étapes suivantes :
- détermination d'une donnée de temps, dite source, fournie par une horloge, dite source, de l'appareil source,
- émission d'une trame comprenant ladite donnée de temps source et le signal audio à l'appareil utilisateur,
- réception de ladite trame par l'appareil utilisateur,
- détermination d'une donnée de temps, dite utilisateur, fournie par une horloge, dite utilisateur, après au moins une étape de traitement dudit signal audio au niveau de l'appareil utilisateur ;
- détermination d'une différence, dite durée de restitution, entre lesdites données de temps utilisateur et source.

Préférentiellement, la donnée de temps source fournie par l'horloge source peut être déterminée/lue le plus tôt possible lorsque que l'appareil source reçoit le signal audio à restituer, c'est-à-dire avant/lors de la première étape mise en oeuvre par l'appareil source en relation avec le signal audio. De cette manière, le procédé selon l'invention permet de prendre en compte la totalité de la ou des latences introduites par l'appareil source lors du ou des traitements du signal audio au niveau de l'appareil source. Selon un exemple de réalisation, la première étape mise en oeuvre par l'appareil source sur le signal audio peut être une étape d'échantillonnage du signal audio et la donnée de temps source peut être déterminée au niveau de l'appareil source, comme étant celle fournie par l'horloge source avant ou au début de ladite étape d'échantillonnage.

Préférentiellement, la donnée de temps utilisateur fournie par l'horloge utilisateur peut être déterminée/lue le plus tard possible lorsque que l'appareil source diffuse le contenu audio, c'est-à-dire après/lors de la dernière étape mise en oeuvre par l'appareil utilisateur en relation avec le signal audio. De cette manière, le procédé selon l'invention permet de prendre en compte la totalité de la ou des latences introduites par l'appareil utilisateur lors du ou des traitements du signal audio. Selon un exemple de réalisation, la dernière étape mise en oeuvre par l'appareil utilisateur sur le signal audio peut être une étape de transfert des données vers un moyen d'émission sonore et la donnée de temps utilisateur peut être déterminée au niveau de l'appareil utilisateur, comme étant celle fournie par l'horloge utilisateur après ou à la fin de ladite étape de transfert.

Selon un mode de réalisation alternatif, la latence source, respectivement la latence utilisateur, peut être déterminée directement au niveau de l'appareil source, respectivement de l'appareil utilisateur. Pour ce faire :
- une première donnée de temps source, respectivement utilisateur, est déterminée/lue le plus tôt possible au niveau de l'appareil source, respectivement au niveau de l'appareil utilisateur, au début du traitement du signal audio par l'appareil source, respectivement par l'appareil utilisateur ; et
- une deuxième donnée de temps source, respectivement utilisateur, est déterminée/lue le plus tard possible au niveau de l'appareil source, respectivement au niveau de l'appareil utilisateur, en fin de traitement du signal audio par l'appareil source, respectivement l'appareil utilisateur.

La latence source, respectivement utilisateur, peut ensuite être déterminée par soustraction de la première donnée de temps de la deuxième donnée de temps. La latence source peut ensuite être transférée à l'appareil utilisateur pour être pris en compte dans le calcul de la latence de traitement.

Par exemple, la première étape mise en oeuvre par l'appareil source sur le signal audio peut être une étape d'échantillonnage et la dernière étape mise en oeuvre par l'appareil source sur le signal audio peut être l'étape de transfert des données vers l'appareil utilisateur. Par conséquent, la première donnée de temps source peut être une donnée de temps fournie par l'horloge source avant/au début de ladite étape d'échantillonnage et la deuxième donnée de temps source peut être une donnée de temps fournie par l'horloge source après/à la fin de ladite étape d'émission.

Selon un exemple non limitatif, la première étape mise en oeuvre par l'appareil utilisateur sur le signal audio peut être l'étape de réception et la dernière étape mise en oeuvre par l'appareil source sur le signal audio peut être une étape de transfert des données vers un moyen d'émission sonore. Par conséquent, la première donnée de temps utilisateur peut être une donnée de temps fournie par l'horloge utilisateur au début de ladite étape de réception et la deuxième donnée de temps utilisateur peut être une donnée de temps fournie par l'horloge utilisateur après/à la fin de ladite étape de transfert.

Préférentiellement, le procédé selon l'invention peut comprendre pour au moins un appareil utilisateur, une mesure d'une durée, dite de référence, comprenant :
- une durée dite, différence d'horloge, entre une horloge, dite source, de l'appareil source et une horloge, dite utilisateur, dudit appareil utilisateur, et
- une durée, dite durée de propagation, entre l'étape d'émission du signal audio par l'appareil source et l'étape de réception dudit signal audio par l'appareil utilisateur.

Le procédé selon l'invention peut ensuite comprendre une prise en compte de la durée de référence pour la détermination de la valeur du retard quelle que soit la version du procédé selon l'invention, à savoir que le retard soit constant selon la première version ou que le retard soit variable selon la deuxième version préférée de l'invention.

Une telle mesure permet de déterminer une différence d'horloge entre l'appareil source et le ou les appareils utilisateurs. En effet, la probabilité est très faible pour que l'horloge source soit synchronisée avec chaque horloge utilisateur. Une différence entre l'horloge source et le ou les horloges utilisateurs introduit une imprécision lors de l'étape de recalage. Cette imprécision est différente pour chaque appareil utilisateur, et il est nécessaire de la prendre en compte de manière individuelle pour chaque appareil utilisateur, en vue de réaliser un recalage précis du contenu audio avec le contenu vidéo au niveau de chaque appareil utilisateur.

De plus, une telle mesure de la durée de référence permet de prendre en compte la durée de propagation du signal entre l'étape d'émission réalisée par l'appareil source et l'étape de réception réalisée par l'appareil utilisateur. Cette durée de propagation peut dépendre du type/marque/modèle de l'appareil mais également de son état de fonctionnement au moment de la diffusion, ou encore de la connexion sans fil entre l'appareil source et l'appareil utilisateur.

Selon un mode de réalisation préféré, au moins une mesure de la durée de référence peut comprendre les étapes suivantes :
- émission de l'appareil source vers l'appareil utilisateur uniquement d'une donnée de temps, dite source, fournie par l'horloge source juste avant, ou lors de, ladite étape d'émission, ladite donnée de temps source étant éventuellement incorporée dans une trame, dite initiale ;
- réception de ladite donnée de temps source par l'appareil utilisateur ;
- détermination d'une donnée de temps, dite utilisateur, fournie par l'horloge utilisateur juste après, ou lors de, ladite étape de réception ; et
- détermination de la durée de référence par soustraction desdites données de temps utilisateur et source.

En outre, au moins une mesure de la latence de traitement peut comprendre une soustraction de la durée de référence de la durée de diffusion.

Le fait de soustraire la durée de référence de la durée de diffusion permet de déterminer de manière précise la latence de traitement car la latence de traitement ainsi déterminée est indépendante :
- d'une part d'une différence d'horloge entre l'appareil source et l'appareil utilisateur, et ce pour chaque appareil de manière individuelle ; et
- d'autre part de la durée de propagation du signal entre l'appareil source et chaque appareil utilisateur, et ce pour chaque appareil de manière individuelle.

Il a été décrit que le retard variable peut être déterminé en fonction de la latence de traitement.

Bien entendu, le retard variable peut également être déterminé en fonction d'autres paramètres alternativement ou en plus de la latence de traitement. Ainsi, la détermination du retard variable peut prendre en compte au moins une valeur d'au moins un des paramètres suivants :
- un niveau de charge d'un processeur de l'appareil utilisateur,
- un nombre de tâches, en cours de réalisation/ou en attente de réalisation, au niveau dudit appareil utilisateur,
- un niveau de charge d'une batterie dudit appareil utilisateur,
- un taux de remplissage d'une file d'attente au niveau dudit appareil utilisateur,
- un état de fonctionnement d'un organe dudit appareil utilisateur tel qu'un écran dudit appareil utilisateur ou une batterie ;
- une gestion d'une utilisation d'une batterie embarquée dans l'appareil et alimentant l'appareil.

Dans ce cas, au moins une itération de la détermination du retard variable peut en outre comprendre une mesure de ladite valeur dudit au moins un paramètre, par exemple au niveau de l'appareil utilisateur, par consultation d'un module de gestion de l'appareil utilisateur ou de chacun des organes de l'appareil source concerné par le paramètre en question.

La prise en compte de la gestion de l'utilisation d'une batterie de l'appareil est très importante dans le procédé selon l'invention et permet de réaliser une restitution plus précise. En effet, dans les appareils électriques personnels, l'autonomie de la batterie est une des contraintes principales. Il existe une gestion complexe du fonctionnement de l'appareil, tel que par exemple la mise en veille de l'écran de l'appareil, d'un processeur de l'appareil, et plus généralement d'une multitude de composants de l'appareil en vue d'améliorer l'autonomie, et ce même sur des périodes courtes plus petites que la durée de restitution. Cette gestion modifie l'état de fonctionnement de l'appareil qui doit être pris en compte dans la détermination de la valeur du retard. Le procédé selon l'invention permet de prendre en compte cette gestion au travers des paramètres de fonctionnement de l'appareil.

Préférentiellement, le procédé selon l'invention peut comprendre plusieurs itérations de détermination du retard variable.

Dans ce cas, au moins une, préférentiellement chaque, détermination du retard variable peut prendre en compte une valeur d'une latence de traitement, et éventuellement d'un autre paramètre relatif au fonctionnement de l'appareil utilisateur (par exemple au moins un des paramètres décrits plus haut), déterminée lors d'au moins une, préférentiellement de chaque, itération précédente de ladite étape de détermination du retard variable.

Une telle prise en compte d'au moins une valeur mesurée/déterminée d'au moins un paramètre lors d'au moins une itération précédente peut en particulier être réalisée par une régression multivariée prenant en compte ladite au moins une valeur.

Selon un exemple de réalisation particulier, le signal audio peut être transmis à l'appareil utilisateur par une pluralité de trames, comprenant chacun au moins un paquet de données audio numéroté, la détermination du retard variable étant réalisée pour chacune desdites trames.

Dans ce cas, le procédé selon l'invention peut comprendre au moins une itération d'une phase de traitement, dite source, réalisée au niveau de l'appareil source avant l'étape de réception, ladite phase de traitement source comprenant les étapes suivantes :
- échantillonnage du signal audio sur une durée prédéterminée, dite d'échantillonnage,
- au moins une étape de traitement audio la dite étape de traitement audio comprenant :
   ▪ une application d'un filtre passe-bande pour éliminer certaines fréquences dans le signal audio, et/ou
   ▪ une concaténation d'au moins deux pistes dudit signal audio lorsque le signal audio comprend plusieurs pistes,
- construction d'un paquet de données comprenant le signal audio, et éventuellement un numéro d'ordre, et
- compression de données,
- incorporation du signal audio dans une trame, avec une donnée de temps source, ladite trame étant ensuite émise vers l'appareil utilisateur de manière sans fil.

La latence source peut alors comprendre une latence introduite par au moins une, préférentiellement chacune, desdites étapes de la phase de traitement source.

Lorsque la latence source comprend les latences introduites par toutes les étapes de la phase de traitement source, la donnée de temps source est déterminée/lue depuis l'horloge source au début de la première étape de la phase de traitement source, à savoir par exemple l'étape d'échantillonnage.

De plus, le procédé selon l'invention peut comprendre au moins une itération d'une phase de traitement, dite utilisateur, réalisée au niveau de l'appareil utilisateur avant l'étape de réception, ladite phase de traitement utilisateur comprenant les étapes suivantes :
- extraction du ou des paquets de données depuis la trame reçue,
- extraction de la donnée de temps source depuis la trame,
- décompression de données,
- reconstruction de paquets de données, éventuellement en fonction de leur numéro d'ordre, éventuellement reconstruction de paquets perdus,
- recalage, et
- transfert des données.

La latence utilisateur peut alors comprendre une latence introduite par au moins une, préférentiellement chacune, desdites étapes de la phase de traitement utilisateur.

Lorsque la latence utilisateur comprend les latences introduites par toutes les étapes de la phase de traitement utilisateur, la donnée de temps utilisateur est déterminée/lue depuis l'horloge utilisateur à la fin de la dernière étape de la phase de traitement utilisateur, à savoir par exemple l'étape de transfert vers un moyen d'émission sonore.

Pour un contenu audio donné, le procédé selon l'invention peut comprendre une émission par l'appareil source d'une pluralité de signaux sonores correspondant au contenu audio sur plusieurs canaux et/ou de fréquences, tels que par exemple :
- au moins un canal ou une fréquence associée audit contenu audio dans une langue donnée,
- au moins un canal ou une fréquence associée à une version dudit contenu audio pour des personnes souffrant d'un déficit auditif,
- au moins un canal ou une fréquence associée seulement aux dialogues compris dans le contenu audio, etc.

Dans ce cas, le procédé selon l'invention est réalisé pour chacun desdits canaux/fréquence indépendamment.

De plus, le procédé selon l'invention peut comprendre, pour chaque appareil utilisateur, la sélection d'un canal ou d'une fréquence. Une telle sélection peut être réalisée manuellement par l'utilisateur ou de manière automatisée en fonction d'un profil associé à l'utilisateur et préalablement mémorisé dans l'appareil utilisateur, ou encore de manière semi-automatisée en fonction d'un ou de paramètres renseignés par l'utilisateur au début de la restitution sonore.

L'invention peut être appliquée à la restitution d'un contenu audio associé à un contenu visuel affiché sur au moins un écran dans un lieu tel qu'un cinéma, un restaurant, un bar, un aéroport, ou encore dans une salle de conférence, amphithéâtre, salles de cours, salles de théâtre, en particulier à destination d'un public souffrant d'un déficit auditif.

Suivant un autre aspect de l'invention, il est proposé un système de restitution d'un contenu sonore associé à un contenu visuel, ledit contenu sonore étant représenté par un signal audio décalé dans le temps d'une durée prédéterminée constante, dite avance, par rapport au contenu visuel, ledit système comprenant :
- au moins un moyen, dit appareil source, pour émettre de manière sans fil ledit signal audio, et
- au moins un moyen, dit appareil utilisateur, pour recevoir de manière sans fil ledit signal audio et diffuser le contenu sonore ;
ledit au moins un appareil utilisateur et ledit au moins un appareil source étant configurés pour mettre en oeuvre toutes les étapes du procédé selon l'invention.

Selon une version préférée du système selon l'invention, l'appareil utilisateur peut être un Smartphone ou une tablette ou un baladeur équipé :
- d'une antenne pour une réception sans fil de données, par exemple une antenne WIFI pour recevoir des données au travers d'une connexion WIFI ;
- d'au moins un haut-parleur ou d'une prise audio sur lequel le contenu audio peut être diffusé, et
- d'une application informatique mettant en oeuvre les étapes du procédé selon l'invention entre l'étape de réception et l'étape de diffusion du contenu audio.

Selon un exemple de réalisation particulier, l'appareil source est un appareil électronique informatique comprenant :
- au moins une entrée pour recevoir le signal audio,
- au moins une antenne pour émettre le signal audio de manière sans fil à destination d'un ou plusieurs appareils utilisateurs, en unicast ou en broadcast, par exemple suivant la technologie WIFI,
- au moins un moyen matériel et/ou au moins un programme informatique mettant en oeuvre les étapes du procédé selon l'invention entre l'étape de réception du signal audio et l'étape d'émission sans fil du signal audio vers le ou les appareils utilisateurs.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un premier exemple de réalisation du procédé selon l'invention dans lequel le retard est constant ;
- la FIGURE 2 est une représentation schématique d'un exemple de réalisation préféré du procédé selon l'invention dans lequel le retard est variable ;
- la FIGURE 3 est une représentation schématique d'un exemple de réalisation d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

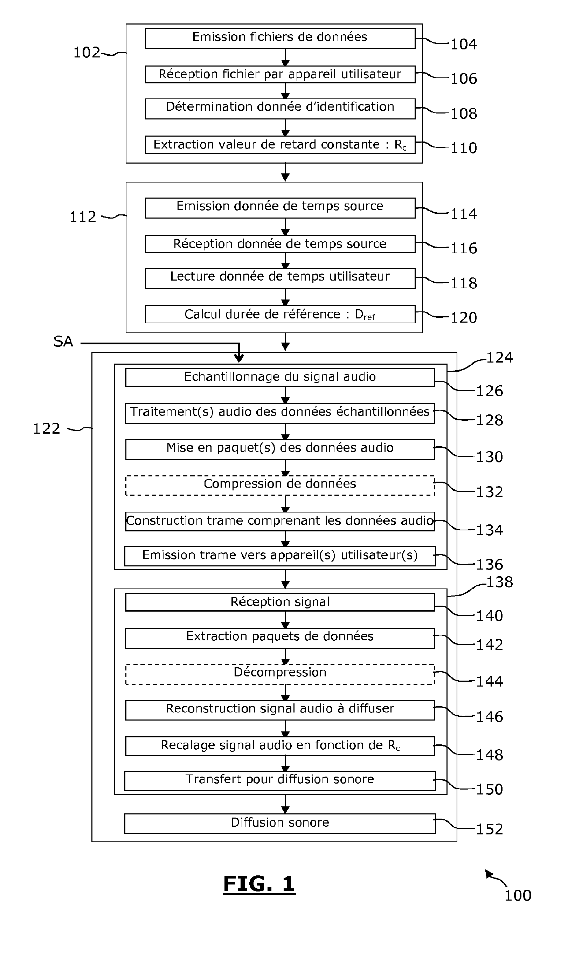

La FIGURE 1 est une représentation schématique sous la forme d'un diagramme des étapes d'un exemple de réalisation non limitatif d'une première version du procédé selon l'invention.

Le procédé 100 représenté sur la FIGURE 1 permet de restituer un contenu audio sur un ou plusieurs appareils utilisateurs. Le contenu audio est représenté par un signal audio SA préalablement décalé d'une durée, dite avance, notée Δ dans la suite de la description, par rapport à un signal vidéo représentant un contenu visuel auquel est associé le contenu audio.

Le procédé 100 comprend une phase 102, initiale, pour déterminer pour chaque appareil utilisateur une durée de recalage, dite retard, constante et dépendant de l'appareil utilisateur. Ce retard constant est utilisé par chaque appareil utilisateur pour recaler le signal audio en vue de diffuser le contenu audio de manière simultanée avec le contenu visuel. Cette phase initiale 102 est donc réalisée pour chaque appareil utilisateur.

Dans l'exemple représenté sur la FIGURE 1, la phase 102 comprend une étape 104 d'émission d'un fichier comprenant pour chaque type/marque/modèle d'appareil une valeur constante de retard à utiliser par l'appareil pour recaler le signal audio. La valeur de retard pour chaque appareil est mémorisée en association avec une donnée d'identification de l'appareil, à savoir une donnée relative à un type, une marque, un modèle ou une version d'un appareil utilisateur.

Lors d'une étape 106, le fichier est reçu par chaque appareil utilisateur.

Lors d'une étape 108, chaque appareil utilisateur détermine sa donnée d'identification, par exemple par requête auprès d'un module de gestion de l'appareil utilisateur.

En fonction de la donnée d'identification déterminée, chaque appareil extrait du fichier reçu lors de l'étape 106, la valeur du retard à appliquer au signal vidéo pour recaler le contenu sonore avec le contenu visuel, lors d'une étape 110. La valeur constante de retard est notée R_{c} dans la suite.

Bien entendu, le fichier de données peut être émis par l'appareil source ou par tout autre appareil.

La phase 102 de détermination peut être réalisée juste avant la restitution sonore ou alors bien avant la restitution sonore.

La phase 102 peut par exemple être réalisée lors de l'installation d'une application client sur chaque appareil utilisateur, l'application pouvant être chargée sur l'appareil client depuis une plateforme d'applications. Le fichier de données peut être chargé sur l'appareil utilisateur en même temps que l'application client ou par l'application client.

Le procédé 100 peut en outre comprendre, une phase 112, de mesure de détermination d'une durée, dite de référence, réalisée pour chaque appareil utilisateur et comprenant :
- une durée dite, différence d'horloge, entre une horloge, dite source, de l'appareil source et une horloge, dite utilisateur, dudit appareil utilisateur, et
- une durée, dite durée de propagation, entre l'étape d'émission du signal audio par l'appareil source et l'étape de réception dudit signal audio par l'appareil utilisateur.

La phase 112 comprend une étape 114 de lecture d'une donnée de temps, dite source, fournie par l'horloge de l'appareil source, également appelée horloge source.

Juste après l'étape 114 de lecture, le procédé 100 comprend une étape 116 d'émission vers chaque appareil utilisateur, par exemple sous la forme d'une trame de données, la donnée de temps source, sans aucun traitement et sans aucune autre donnée. Autrement dit, l'étape 116 d'émission est réalisée le plus rapidement possible juste après l'étape de lecture de l'horloge source pour minimiser le temps entre le moment de lecture de l'horloge source et l'émission de la donnée de temps source.

Lors d'une étape 118, la donnée de temps source est reçue par chaque appareil utilisateur.

Dès la réception de la donnée de temps source, l'appareil utilisateur lit depuis son horloge, également appelée horloge utilisateur, le temps affiché et obtient une donnée de temps, dit utilisateur.

Lors d'une étape 120, le procédé détermine une différence entre la donnée de temps source reçue et la donnée de temps utilisateur, cette différence comprenant à la somme de :
- la différence d'horloge entre l'horloge source et l'horloge utilisateur, et
- la durée de propagation entre le dispositif source et le dispositif utilisateur.

Cette durée de référence, notée D_{ref} dans la suite, est mémorisée pour être utilisée lors de l'étape de recalage décrite plus loin.

Cette durée de référence D_{ref} est sensiblement constante et ne subit que très peu de variations qui peuvent être considérées comme étant négligeables.

Bien entendu, il est possible de considérer que la durée de référence D_{ref} est constante pour chaque type, marque, modèle et/ou version d'appareil utilisateur. Dans ce cas, la durée de référence est préalablement déterminée pour chaque appareil suivant le type, la marque, le modèle et/ou la version de l'appareil utilisateur et renseignée à l'appareil utilisateur, par exemple de manière similaire à ce qui est réalisé pour le retard constant lors de la phase 102 initiale, et en particulier pendant la phase initiale au même temps que le retard fixe.

Le procédé 100 comprend ensuite une phase 122 de diffusion du signal audio reçu par l'appareil source après avoir été décalé de l'avance Δ.

Cette phase de diffusion 122 comprend au moins une itération d'une phase 124 de traitement, dite source, réalisée au niveau de l'appareil source.

La phase de traitement source 124 comprend une étape 126 d'échantillonnage du signal audio SA.

Suite à l'étape 126 d'échantillonnage, la phase de traitement source 124 peut comprendre une étape 128 de traitement audio comprenant au moins un traitement des données échantillonnées. Cette étape de traitement audio peut comprendre :
- un filtrage passe-bande pour éliminer certaines fréquences,
- un filtrage passe-bande pour faire ressortir la voix et/ou
- une concaténation d'au moins deux pistes audio lorsque le signal audio comprend plusieurs pistes.

Puis, lors d'une étape 130, un ou plusieurs paquets de données sont construits à partir des données audio, éventuellement avec un ordonnancement de sorte que chaque paquet est numéroté avec un numéro d'ordre continu.

Puis une étape 132 optionnelle réalise une compression des paquets de données.

Les paquets de données sont ensuite incorporés dans une trame, lors d'une étape 134.

La trame est émise de manière sans fil vers un ou plusieurs appareils utilisateurs lors d'une étape d'émission 136 après avoir été horodatée.

La phase de diffusion 122 comprend au moins une itération d'une phase 138 de traitement, dite utilisateur, réalisée au niveau de l'appareil utilisateur. Cette phase 138 de traitement utilisateur est réalisée à chaque réception d'une trame de données depuis l'appareil source.

La phase 138 de traitement utilisateur comprend une étape 140 de réception d'une trame de données depuis l'appareil source.

Les paquets de données sont extraits de la trame reçue lors d'une étape 142 et puis décompressés lors d'une étape optionnelle 144.

Lors d'une étape 146, le signal audio à diffuser est reconstruit, par exemple en fonction du numéro d'ordre des paquets. Ces derniers sont ordonnancés grâce à leur numéro d'ordre. Cette étape de reconstruction peut comprendre un traitement de données ayant par exemple pour objectif de construire des paquets de données qui ont été perdues lors de transmission des données.

Lors d'une étape 148, le signal audio reconstruit est recalé en fonction d'une part, de l'avance constante Δ et d'autre part du retard constant R_{c}. L'avance constante Δ peut être communiquée à l'appareil utilisateur préalablement, par exemple lors de la phase 102 ou la phase 112.

Ensuite, lors d'une étape 150, le signal recalé est transféré à destination d'un moyen de diffusion sonore, tel qu'un haut-parleur ou une sortie audio, pour sa diffusion sonore.

Le procédé 100 comprend enfin une étape 152 de diffusion audio du signal sonore.

L'étape 150 de transfert du signal audio peut comprendre une attribution d'une priorité élevée à une tâche créée pour une telle diffusion sonore au niveau de l'appareil utilisateur, en vue de diminuer la durée entre l'étape de transfert 150 et l'étape diffusion sonore 152.

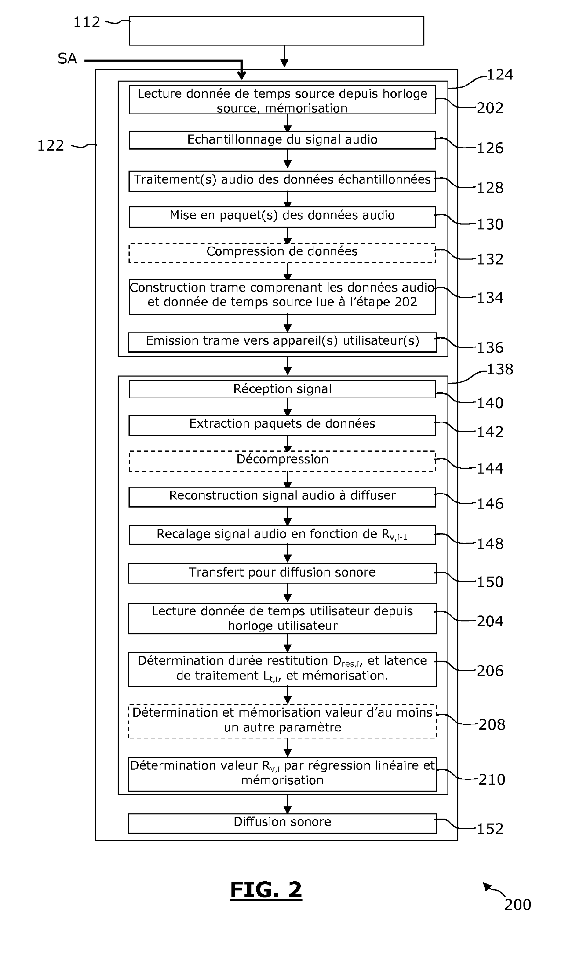

La FIGURE 2 est une représentation schématique sous la forme d'un diagramme des étapes d'un exemple de réalisation non limitatif d'une deuxième version du procédé selon l'invention.

Cette deuxième version est une version préférée du procédé selon l'invention, dans laquelle la valeur du retard est variable, et déterminée en prenant en compte l'état de fonctionnement de l'appareil utilisateur et de l'appareil source lors de la restitution sonore. Ainsi le procédé comprend plusieurs itérations d'une étape de détermination du retard variable et le retard variable déterminé lors d'une itération i est notée R_{v,i} dans la suite.

Le procédé 200 représenté sur la FIGURE 2 comprend toutes les étapes du procédé 100 représenté sur la FIGURE 1, sauf la phase initiale 102.

Le procédé 200 comprend en plus, une étape 202 de lecture d'une donnée de temps source depuis l'horloge, dite source, de l'appareil source. Cette étape 202 est réalisée au début de l'étape d'échantillonnage 126, ou alors juste avant l'étape 126 d'échantillonnage au plus près possible du début de l'étape d'échantillonnage 126. La donnée de temps source lue est mémorisée lors de l'étape 202.

Lors de l'étape 134 de construction de trame, la trame construite comprend, dans le procédé 200 représentée sur la FIGURE 2, les données audio et la donnée de temps source lue à l'étape 202.

De plus, le procédé 200 comprend, après l'étape 150 de transfert des données audio pour diffusion sonore, une détermination d'une valeur du retard variable, R_{v,i}, pour l'itération i en cours de la phase de traitement utilisateur 138.

Pour ce faire, une étape 204 réalise la lecture d'une donnée de temps, dit utilisateur, depuis l'horloge, dite utilisateur, de l'appareil utilisateur. Cette étape 204 est réalisée à la fin de l'étape 150 de transfert, ou alors juste après l'étape 150 de transfert au plus près possible de la fin de l'étape de transfert 150. La donnée de temps source lue est mémorisée lors de l'étape 204.

Une étape 206, réalisée à chaque itération de la phase de traitement utilisateur 138 détermine :
- une durée, dite de restitution, notée D_{res,i} pour l'itération i de la phase de traitement utilisateur 138, par soustraction de la donnée de temps source de la donnée de temps utilisateur ; et
- une latence de traitement, notée L_{t,i} pour l'itération i de la phase de traitement utilisateur 138, par soustraction de la durée de restitution D_{res,i} la durée de référence D_{ref} déterminée à l'étape 120.

La latence de traitement L_{t,i} est mémorisée lors de l'étape 206.

Puis une étape optionnelle 208 détermine et mémorise la valeur d'au moins un autre paramètre relatif au fonctionnement de l'appareil utilisateur, lors de l'itération i de la phase de traitement 138. Un tel paramètre peut comprendre au moins un des paramètres suivants :
- un niveau de charge d'un processeur de l'appareil utilisateur,
- un nombre de tâches, en cours de réalisation/ou en attente de réalisation, au niveau dudit appareil utilisateur,
- un niveau de charge d'une batterie dudit appareil utilisateur,
- un taux de remplissage d'une file d'attente au niveau dudit appareil utilisateur, et
- un état de fonctionnement d'un organe dudit appareil utilisateur tel qu'un écran dudit appareil utilisateur.

Enfin, une étape 210 réalise une détermination et une mémorisation de la valeur de retard variable R_{v,i} en fonction :
- de la valeur de latence de traitement L_{t,i} déterminée lors de l'itération i, et des valeurs de latence de traitement Lt déterminées lors de itérations précédentes de la phase de traitement utilisateur 138 ; et
- éventuellement, de la valeur d'au moins un paramètre déterminé lors de l'itération i, et des valeurs de ce paramètre déterminées lors des itérations précédentes de la phase de traitement utilisateur 138.

Le recalage réalisé lors de l'étape 148 du procédé 200 de la FIGURE 2 est donc réalisé en fonction d'une valeur de retard R_{v,i-1} déterminée lors de l'itération précédente de la phase de traitement utilisateur 138.

La valeur de retard R_{v,i} déterminée lors de l'itération i est utilisée par l'étape de recalage 148 de l'itération suivante de l'étape de traitement utilisateur 138.

Dans l'exemple représenté sur la FIGURE 2 les étapes 206-210 sont réalisées avant l'étape de diffusion sonore 152. Bien entendu, au moins une, voire la totalité, des étapes 206-210 peut être réalisée pendant ou après l'étape de diffusion sonore 152.

De plus, dans l'exemple représenté sur la FIGURE 2, la valeur du retard variable est déterminée à chaque itération de la phase de traitement utilisateur 138. Bien entendu, la valeur du retard variable peut être déterminée suivant une autre fréquence, par exemple toutes les n itérations de la phase de traitement utilisateur 138, avec n ≥1.

Alternativement à ce qui est décrit en référence à la FIGURE 2, il est également possible de mesurer uniquement la latence de traitement introduite lors de la phase de traitement utilisateur et ne pas considérer la latence de traitement introduite lors de la phase de traitement source ou de considérer que la latence de traitement introduite lors de la phase de traitement source est constante. Dans ce cas, la détermination de la valeur de retard variable prendrait en compte la latence de traitement utilisateur, et éventuellement une valeur de latence de traitement source constante.

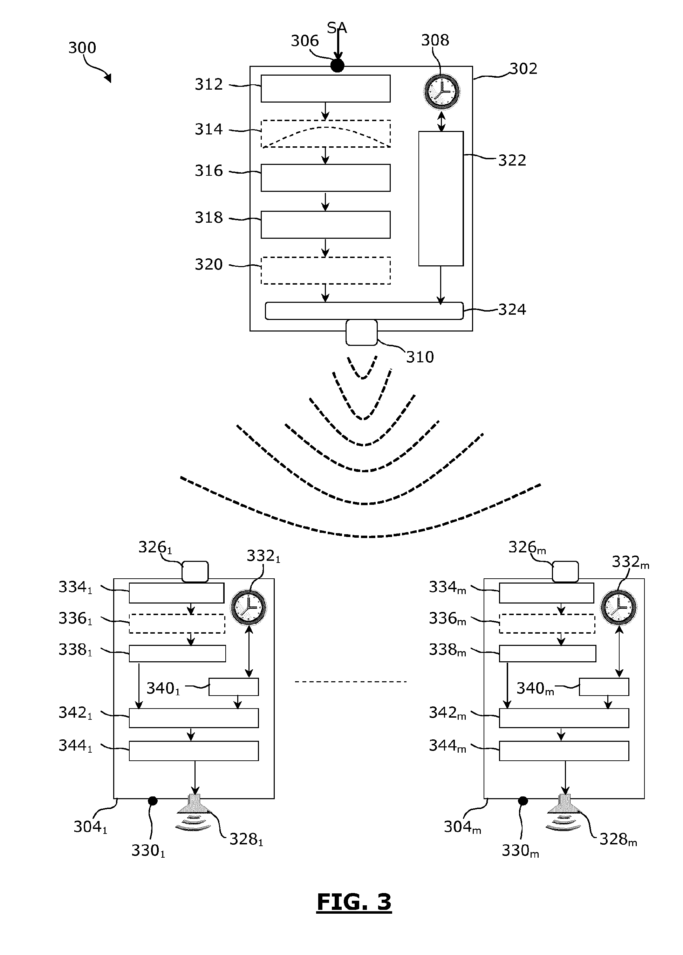

Nous allons maintenant décrire un exemple non limitatif d'un système de restitution sonore selon l'invention en référence à la FIGURE 3.

Le système 300 représenté sur la FIGURE 3 comprend un appareil source 302 et m appareils utilisateurs 304₁-304ₘ, avec m≥1.

L'appareil source 302 est prévu pour transmettre le signal audio vers chacun des appareils utilisateurs 304ⱼ, avec 1≤j≤m, de manière sans fil, par exemple par WIFI ou par une modulation FM ou encore par un réseau local sans fil.

L'appareil source 302 comprend au moins une entrée 306 pour recevoir le signal audio, associé à un contenu visuel représenté par un signal vidéo, préalablement décalé par rapport au signal vidéo d'une avance Δ.

L'appareil source 302 comprend en outre :
- une horloge 308, dite source,
- un moyen 310 d'émission sans fil de données, par exemple une antenne WIFI,
- un module 312 d'échantillonnage du signal audio SA,
- au moins un filtre passe-bande 314, optionnel, pour éliminer certaines fréquences,
- un moyen 316 de concaténation d'au moins deux pistes audio lorsque le signal audio comprend plusieurs pistes,
- un moyen 318 de mise en paquet de données audio de manière ordonnée,
- un moyen 320, optionnel, de compression des paquets de données,
- un moyen 322 de détermination d'une donnée de temps par lecture de l'horloge 308, et
- et un moyen 324 de génération de trames avec d'une part les paquets de données et éventuellement une donnée de temps.

Chaque appareil utilisateur 304₁-304ₘ comprend :
- un moyen 326₁-326ₘ de réception sans fil du signal audio transmis par l'appareil source 302, tel qu'une antenne WIFI ou une antenne FM,
- au moins un moyen de diffusion sonore du contenu sonore tel qu'un haut-parleur 328₁-328ₘ ou une sortie audio de type prise jack 330₁-330ₘ,
- une horloge utilisateur 332₁-332ₘ,
- un module 334₁-334ₘ d'extraction d'une trame reçue des paquets de données,
- un module 336₁-336ₘ, optionnel, de décompression de données,
- un module 338₁-338ₘ de reconstruction du signal audio à partir des données reçues, un tel module pouvant comprendre un moyen de traitement (non représenté) ayant pour objectif de reconstruire des paquets de données qui ont été perdues lors de transmission sans fil des données,
- un moyen 340₁-340ₘ de détermination d'une donnée de temps par lecture de l'horloge 332₁-332ₘ,
- un module 342₁-342ₘ de détermination d'un décalage constant ou variable tel que décrit plus haut, et
- un module 344₁-344ₘ de recalage du signal audio en fonction du retard déterminé par le module 340₁-340ₘ.

Chaque appareil utilisateur 304₁-304ₘ et l'appareil source 302 peuvent comprendre au moins un moyen de mémorisation, pour mémoriser au moins une donnée relative à une valeur constante de retard ou au moins une donnée relative à au moins un paramètre pour le calcul d'un retard variable.

Le moyen d'émission sans fil 310 de l'appareil source 302 peut être intégré ou non à l'appareil source.

Chaque appareil utilisateur 304 peut être un appareil de type Smartphone, PDA, tablette, phablet, etc.

Chaque appareil utilisateur 304 peut être configuré pour mettre en oeuvre une restitution d'un contenu sonore avec une valeur de retard constante, par exemple selon le procédé 100 de la FIGURE 1, ou une restitution d'un contenu sonore avec une valeur de retard variable, par exemple selon le procédé 200 de la FIGURE 2. De plus, parmi les appareils utilisateurs 304₁-304ₘ certains peuvent être configurés pour mettre en oeuvre une restitution d'un contenu sonore avec une valeur de retard constante, par exemple selon le procédé 100 de la FIGURE 1, et d'autres peuvent être configurés pour mettre en oeuvre une restitution d'un contenu sonore avec une valeur de retard variable, par exemple selon le procédé 200 de la FIGURE 2.

Bien sûr, l'invention n'est pas limitée aux exemples qui viennent d'être décrits et de nombreux aménagements peuvent être apportés à ces exemples sans sortir du cadre de l'invention.

## Revendications

1. Procédé (100;200) de restitution d'un contenu sonore associé à un contenu visuel, ledit contenu sonore étant représenté par un signal audio (SA) décalé dans le temps d'une durée prédéterminée constante, dite avance, par rapport au contenu visuel, ledit procédé (100 ; 200) comprenant les étapes suivantes :
- émission sans fil (136) dudit signal audio, par au moins un moyen (302), dit appareil source, vers au moins un moyen (304₁-304ₘ), dit appareil utilisateur ;
- réception (140) dudit signal audio par ledit au moins un appareil utilisateur (304₁-304ₘ),
- recalage (148) automatique, par ledit au moins un appareil utilisateur (304₁-304ₘ), dudit signal audio en fonction de ladite avance et d'une durée, dite retard, en vue de sa diffusion simultanée avec ledit contenu visuel, et
- diffusion (152) dudit contenu sonore par ledit au moins un appareil utilisateur (304₁-304ₘ) ;
**caractérisé en ce que** la valeur du retard est déterminée en fonction d'un état de fonctionnement dudit appareil utilisateur (304₁-304ₘ), ledit procédé comprenant en outre :
- une lecture, dans un moyen de mémorisation, de ladite valeur de retard associée audit appareil utilisateur et préalablement mesurée pour ledit appareil ; ou
- au moins une itération d'une étape de détermination (202-210) dudit retard variable tout au long de ladite restitution, en fonction d'une latence, dite de traitement, comprenant au moins une latence, dite utilisateur, induite au niveau dudit appareil utilisateur à partir de l'étape de réception, et mesurée lors de ladite restitution.

2. Procédé (100) selon la revendication 1, **caractérisé en ce que**, pour au moins un appareil utilisateur (304₁-304ₘ), le retard est constant, préalablement déterminé pour chaque appareil utilisateur (304₁-304ₘ) et renseigné audit appareil utilisateur (304₁-304ₘ).

3. Procédé (200) selon la revendication 1, **caractérisé en ce que**, pour au moins un appareil utilisateur (304₁-304ₘ), le retard est variable pendant la restitution du contenu sonore et dépend du fonctionnement, tout au long de ladite restitution, dudit appareil utilisateur (304₁-304ₘ), et éventuellement de l'appareil source (302), ledit procédé (200) comprenant au moins une itération d'une détermination (202-210) dudit retard variable tout au long de ladite restitution.

4. Procédé (200) selon la revendication 3, **caractérisé en ce que** le retard variable est fonction de la latence de traitement, ladite latence de traitement comprenant :
- au moins une latence, dite utilisateur, induite au niveau de l'appareil utilisateur (304₁-304ₘ) à partir de l'étape de réception (140), et
- éventuellement au moins une latence, dite source, induite au niveau de l'appareil source (302) jusqu'à l'étape d'émission (136) ;
au moins une, préférentiellement toutes les, itérations de la détermination (202-210) du retard variable comprenant une mesure (202-206) de ladite latence de traitement.

5. Procédé selon la revendication 4, **caractérisé en ce qu'**au moins une mesure (202-206) de latence de traitement comprend les étapes suivantes :
- détermination (202) d'une donnée de temps, dite source, fournie par une horloge (308), dite source, de l'appareil source (302),
- émission (136) d'une trame comprenant ladite donnée de temps source et le signal audio à l'appareil utilisateur (304₁-304ₘ),
- réception (140) de ladite trame par l'appareil utilisateur (304₁-304ₘ),
- détermination (204) d'une donnée de temps, dite utilisateur, fournie par une horloge (332₁-332ₘ), dite utilisateur, après au moins une étape de traitement (142-150) dudit signal audio au niveau de l'appareil utilisateur (304₁-304ₘ),
- détermination (206) d'une différence, dite durée de restitution, entre lesdites données de temps utilisateur et source.

6. Procédé (100;200) selon l'une quelconque des revendications précédentes, **caractérisé en ce qu'**il comprend, pour au moins un appareil utilisateur (304₁-304ₘ), une mesure (112) d'une durée, dite de référence, comprenant :
- une durée dite, différence d'horloge, entre une horloge (308), dite source, de l'appareil source (302) et une horloge (332₁-332ₘ), dite utilisateur, dudit appareil utilisateur (304₁-304ₘ), et
- une durée, dite durée de propagation, entre l'étape d'émission (136) du signal audio par l'appareil source (302) et l'étape de réception (140) dudit signal audio par l'appareil utilisateur (304₁-304ₘ).

7. Procédé (100;200) selon la revendication précédente, **caractérisé en ce que** la mesure (112) de la durée de référence comprend les étapes suivantes :
- émission (114) de l'appareil source (302) vers l'appareil utilisateur (304₁-304ₘ) uniquement d'une donnée de temps, dite source, fournie par l'horloge source (308) juste avant ladite étape d'émission (114), ladite donnée de temps source étant éventuellement incorporée dans une trame, dite initiale ;
- réception (116) de ladite donnée de temps source par l'appareil utilisateur (304₁-304ₘ) ;
- détermination (118) d'une donnée de temps, dite utilisateur, fournie par l'horloge utilisateur (332₁-332ₘ) juste après, ou au moment de, ladite étape de réception (116) ; et
- détermination (120) de la durée de référence par soustraction desdites données de temps utilisateur et source.

8. Procédé (200) selon la revendication 5 et l'une quelconque des revendications 6 ou 7, **caractérisé en ce qu'**au moins une mesure de la latence de traitement (202-206) comprend une étape (206) de soustraction de la durée de référence de la durée de restitution.

9. Procédé (200) selon l'une quelconque des revendications 3 à 8, **caractérisé en ce que** le retard variable est déterminé en outre en fonction d'au moins une valeur d'au moins un des paramètres suivants :
- un niveau de charge d'un processeur de l'appareil utilisateur,
- un nombre de tâches, en cours de réalisation/ou en attente de réalisation, au niveau dudit appareil utilisateur,
- un niveau de charge d'une batterie dudit appareil utilisateur,
- un taux de remplissage d'une file d'attente au niveau dudit appareil utilisateur,
- un état de fonctionnement d'un organe dudit appareil utilisateur tel qu'un écran dudit appareil utilisateur,
au moins une itération de la détermination (202-210) du retard variable comprenant en outre une étape (208) de mesure de ladite valeur dudit au moins un paramètre.

10. Procédé (200) selon l'une quelconque des revendications précédentes, **caractérisé en ce qu'**il comprend plusieurs itérations de la détermination (202-210) du retard variable, au moins une, préférentiellement chaque, détermination (202-210) du retard variable prenant en compte, en particulier par une régression multivariée de la valeur de latence de traitement, et éventuellement d'un autre paramètre relatif au fonctionnement de l'appareil utilisateur (304₁-304ₘ), déterminée lors d'au moins une, préférentiellement de chaque, itération précédente de ladite étape de détermination 202-210) du retard variable.

11. Procédé (200) selon l'une quelconque des revendications précédentes, **caractérisé en ce que** le signal audio (SA) est transmis à l'appareil utilisateur (304₁-304ₘ) par une pluralité de trames, comprenant chacun au moins un paquet de données audio numéroté, la détermination (202-210) du retard variable étant réalisée pour chacune desdites trames.

12. Procédé (200) selon la revendication 11, **caractérisé en ce qu'**il comprend au moins une itération d'une phase de traitement (124), dite source, réalisée au niveau de l'appareil source (302) avant l'étape de réception (140), ladite phase de traitement source (124) comprenant les étapes suivantes :
- échantillonnage (126) du signal audio (SA) sur une durée prédéterminée, dite d'échantillonnage,
- au moins une étape (128) de traitement audio la dite étape de traitement audio (128) comprenant :
▪ une application d'un filtre passe-bande pour éliminer certaines fréquences dans le signal audio, et/ou
▪ une concaténation d'au moins deux pistes dudit signal audio lorsque le signal audio comprend plusieurs pistes,
- construction (130) d'un paquet de données comprenant le signal audio, et éventuellement un numéro d'ordre,
- compression (132) de données, et
- incorporation (134) du signal audio dans une trame, avec une donnée de temps source, ladite trame étant ensuite émise vers l'appareil utilisateur (304₁-304ₘ) de manière sans fil ;
la latence source comprenant une latence introduite par au moins une, préférentiellement chacune, desdites étapes (126-134) de la phase de traitement source 124.

13. Procédé (200) selon l'une quelconque des 11 ou 12, **caractérisé en ce qu'**il comprend au moins une itération d'une phase de traitement (138), dite utilisateur, réalisée au niveau de l'appareil utilisateur (304₁-304ₘ) après l'étape d'émission (136), ladite phase de traitement utilisateur (138) comprenant les étapes suivantes :
- extraction (142) du ou des paquets de données depuis la trame reçues,
- extraction de la donnée de temps source depuis la trame,
- décompression (144) de données,
- reconstruction (146) de paquets de données, éventuellement en fonction de leur numéro d'ordre, éventuellement reconstruction de paquets perdus,
- recalage (148), et
- transfert (150) des données ;
la latence utilisateur comprenant une latence introduite par au moins une, préférentiellement chacune, desdites étapes (142-150) de la phase de traitement utilisateur (138).

14. Procédé (100;200) selon l'une quelconque des revendications précédentes pour la restitution d'un contenu audio associé à un contenu vidéo affiché sur au moins un écran dans un lieu tel qu'un cinéma, un restaurant, un bar, un aéroport, ou encore dans une salle de conférence, en particulier à destination d'un public souffrant d'un déficit auditif.

15. Système (300) de restitution d'un contenu sonore associé à un contenu visuel, ledit contenu sonore étant représenté par un signal audio (SA) décalé dans le temps d'une durée prédéterminée constante, dite avance, par rapport au contenu visuel, ledit système (300) comprenant :
- au moins un moyen (302), dit appareil source, pour émettre de manière sans fil ledit signal audio, et
- au moins un moyen (304₁-304ₘ), dit appareil utilisateur, pour recevoir de manière sans fil ledit signal audio et diffuser le contenu sonore ;
ledit au moins un appareil utilisateur (304₁-304ₘ) et ledit au moins un appareil source (302) étant configurés pour mettre en oeuvre toutes les étapes du procédé (100 ; 200) selon l'une quelconque des revendications précédentes.
